# EUROPÄISCHE PATENTSCHRIFT

(11) **EP 4 373 978 B1**
(45) Veröffentlichungstag und Bekanntmachung des Hinweises auf die Patenterteilung: **25.11.2026**
(21) Anmeldenummer: 21749160.4
(22) Anmeldetag: 23.07.2021
(51) Int. Cl.: C21C 1/06, C21D 1/25, C21D 1/26, C21D 1/28, C21D 1/58, C21D 1/60, C21D 1/607, C21D 1/76, C21D 6/00, C21D 9/38, C21D 9/40, C22C 33/02, C22C 38/18, F16C 33/32, F16C 33/34, F16C 33/62, F16C 33/64, C21D 1/06

(54) **VERFAHREN ZUM HERSTELLEN EINES BAUELEMENTS EINER WÄLZLAGERUNG**
METHOD FOR MANUFACTURING A ROLLING BEARING COMPONENT
PROCÉDÉ POUR LA FABRICATION D'UN ÉLÉMENT DE PALIER À ROULEMENT

(43) Veröffentlichungstag der Anmeldung: 29.05.2024
(73) Patentinhaber: Aktiebolaget SKF, 415 50 Göteborg (SE)
(72) Erfinder: SHERIF, Mohamed, 1211 GZ Hilversum (NL)
(74) Vertreter: Kohl, Thomas
(86) Internationale Anmeldenummer: PCT/EP2021/070698
(87) Internationale Veröffentlichungsnummer: WO 2023/001382

(56) Entgegenhaltungen:
- DE-A1- 102011 088 234
- DE-A1- 102016 123 598
- GB-A- 2 333 782
- US-A1- 2020 010 940

## Beschreibung

Die Erfindung betrifft ein Verfahren zum Herstellen eines Bauelements einer Wälzlagerung.

Aus der DE 197 07 033 A1 ist es bekannt, zur Herstellung von Wälzlagern mit einem hohen Leistungsvermögen unter Verwendung von einsatzgehärteten rostfreien Stählen, die den konventionellen rostfreien Stählen auf Martensit-Basis in Bezug auf Korrosionsbeständigkeit, Wälz-Ermüdungsbeständigkeit und Verschleißfestigkeit überlegen sind und auch eine hohe Kern-Zähigkeit aufweisen, mindestens ein Vertreter aus der Gruppe innerer Laufring, äußerer Laufring und Wälzelemente (Wälzkörper) aus einem Legierungsstahl herzustellen, der im Wesentlichen besteht aus weniger als 0,5 Gew.-% C, 8,0 bis 20,0 Gew.-% Cr, 0,1 bis 1,5 Gew.-% Mn, 0,1 bis 2,0 Gew.-% Si und zum Rest aus Fe und zufälligen Verunreinigungselementen, wobei das Lager auch eine Oberflächenschicht aufweist, die durch Nitrierung oder Carbonitrierung bei einer Temperatur unterhalb Ac1, anschließendes Erwärmen auf eine Temperatur von 900 bis 1200°C, Härten, eine Tieftemperaturbehandlung (unter 0°C) und Anlassen erzeugt worden ist. Dabei wurde insbesondere vom Standpunkt der Produktivität aus Nitrieren im Austenit-Bereich (1100 bis 1250°C) nicht bevorzugt, weil längeres Nitrieren im Austenit-Bereich (1100 bis 1250°C) ein Wachsen und eine Vergröberung der Austenit-Körnchen verursacht, wodurch die Festigkeit des Stahls vermindert wird. Lediglich bei Vergleichsproben wurde bei 1150°C für 4 h hochtemperatur-nitriert. In der US 2020/010940 A1 wird ein Wälzlagerelement offenbart, das nach einer bei einer Temperatur von 1100°C durchgeführten Carbonitrierung gehärtet wird und nach dem Härten angelassen wird.

Aus dem Buch von V.G. Gavriljuk et al. "High nitrogen steels: structure, properties, manufacture, applications", Springer-Verlag, 1999, Seiten 308 bis 311 ist es für eine martensitische Härtung bekannt, einen Stahl mit einem Chromgehalt mit 13 bis 17 Massenprozent zu verwenden, diesen bei einer Temperatur von 1150°C für 24 h Randaufzusticken, um ihn danach zum Zwecke der Austenitkorngrößenreduzierung einem zwischenliegenden weichen Anlassen zu unterziehen, gefolgt von einem zweiten Härten bei eine Temperatur kleiner oder gleich der Randaufstickungstemperatur von 1150°C, woran sich ein Tiefkühlen bei -80°C für 1 h anschließt und schließlich von einem dreimaligen Anlassen bei 450°C für 1 h gefolgt ist.

Aus dem Artikel von H. Berns "Eignung nichtrostender Stähle zum Randaufsticken", Materialwissenschaft und Werkstofftechnik 33 (2002), Seiten 5 bis 11 sind eine ganze Reihe für das Randaufsticken geeigneter Stähle bekannt. Dabei sind für den martensitischen Einsatzfall auch zwei Stähle beschrieben, die dem in der Wälzlagerindustrie bekannten CRONIDUR 30 nahekommen.

Aus dem Artikel von R. Mohammadzadeh et al. "Grain refinement of a nickel and manganese free austenitic stainless steel produced by pressurized solution nitriding", Materials Characterization 93 (2014), Seiten 119 bis 128, ist ein Wärmebehandlungsverfahren beschrieben, bei dem nach einem Gas-Druck-Randaufsticken des Stahls gefolgt von einer Wasserabschreckung und einer anschließenden Austenitkornverfeinerung, die sich wiederum aus einem dekompositionierenden isothermischen Wärmen, gefolgt von einer Wasserabschreckung, gefolgt von einem reaustenitisierenden Wärmen und einer darauffolgenden Wasserabschreckung zusammensetzt. Dabei sind für das Gas-Druck-Nitrieren eine Temperatur von 1200°C, ansteigende Drücke bis 2,5 bar und Dauern von 1 bis 18 h angegeben. Für das dekompositionierende Wärmen wurde schließlich auf 700°C für einer Dauer von 4 h gesetzt. Schließlich wurde das reaustenitisierende Wärmen bei 1200°C und 0,5 h durchgeführt. Der dabei dem Aufsticken zugrunde gelegte Stahl umfasste neben Eisen in Gewichtsprozenten ≤0,002 Kohlenstoff, 22,753 Chrom, 0,054 Nickel, 0,1 Mangan, 2,42 Molybdän, 0,052 Silizium, ≤ 0,5 Kupfer, 0,05 Aluminium, 0,03 Stickstoff, 0,01 Phosphor und 0,007 Schwefel.

Eine Aufgabe der vorliegenden Erfindung ist es unter anderem davon ausgehend, ein Verfahren zum Herstellen eines verbesserten Bauelements einer Wälzlagerung zu schaffen.

Die Aufgabe wird durch den Gegenstand des Patentanspruchs 1 gelöst. Vorteilhafte Ausgestaltungen sind in den Patentsprüchen 2 bis 6 beschrieben.

Mit der erfindungsgemäßen Lösung ist es nunmehr möglich, die Vorteile des Hochtemperatur-Randaufstickens, beispielsweise hinsichtlich der erzielbaren Mikrostrukturen, unter gleichzeitiger Vermeidung der dazu in der DE 197 07 033 A1 beschriebenen Nachteile zu nutzen, indem dem Hochtemperatur-Randaufsticken nachfolgend zur Austenitkorngrößenreduzierung ein Zwischenanlassen und dem nachfolgend ein reaustenitisierendes Glühen eingesetzt wird. Gemäß einer weiteren Erkenntnis dieser Erfindung werden damit aber auch in der DE 197 07 033 A1 nicht erkannte Nachteile der Niedertemperatur-Oberflächenhärtung, wie der Chromnitridbildung durch dehnungsinduzierten Martensit, beispielsweise durch vorausgehendes Drehen, Fräsen, Kaltwalzen, Biegen usw., aber auch des konventionellen Nitrierens, wie der Chromnitridbildung in der Oberfläche mit besonderem Vorteil vermieden. Damit sind schlussendlich nicht nur die wälzlagernotwendigen hohe Randschichthärten, sondern insgesamt mit Vorteil auch eine geringe Ermüdungsanfälligkeit und damit eine lange Gebrauchsdauer erzielbar. Aufgrund der möglichen niedrigen Kohlenstoff-, aber auch Stickstoffgehalte des Ausgangsstahls ist schließlich weiterhin mit Vorteil an der vergleichsweisen Kostengünstigkeit derartiger Edelstähle festgehalten. Es ist somit mit Vorteil ein günstiges, korrosionsbeständiges und eine lange Gebrauchsdauer aufweisendes Bauelement einer Wälzlagerung geschaffen.

Es wurde eine Vielzahl an Versuchen mit unterschiedlichen Temperaturen, Zeitdauern und Stahlzusammensetzungen in unterschiedlichen Kombinationen durchgeführt. Dabei charakterisieren die beanspruchten Temperatur- und Zeitbereiche die vorteilhaften Versuchsergebnisse und die als insbesondere ausgewiesenen Wertebereiche diejenigen, die sich als besonders vorteilhaft herausgestellt haben. Beim Zusammenwirken von Temperatur- und Zeitbereichen, ergibt dabei das Kombinieren von Werte am unteren bzw. oberen Ende eines Temperaturbereichs mit Werten am unteren bzw. oberen Ende des Zeitbereichs in der Regel eine weniger günstige Gesamtsituation, als Kombinationen aus beiden Bereichen in deren Mitte, bzw. der Kombination Werten an unterschiedlichen Enden der beiden Bereiche.

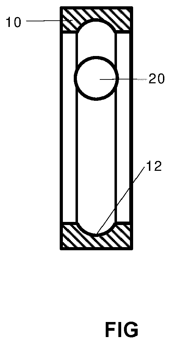

Die Figur zeigt als eine Ausführungsform einen Längsschnitt durch ein als Kugellageraußenring 10 ausgebildetes Abrollbahnelement eines Wälzlagers mit einer Abrollbahn 12 für als Kugeln 20 ausgebildete Wälzköper zum darauf Abrollen, wobei lediglich eine Kugel 20 exemplarisch dargestellt ist. Die Kugeln 20 können dabei in einem nicht dargestellten Käfig angeordnet sein, wobei das Kugellager schließlich noch durch einen ebenfalls nicht dargestellten Kugellagerinnenring komplettiert ist. Andere Ausführungsbeispiele derartiger Bauelemente sind Ringe und Rollen von Rollenlagern, umfassend Kegel-, Zylinder- und Pendelrollenlagern, aber auch von Nadellagern, in einreihiger oder mehrreihiger Ausbildung sowie Kombinationen usw..

Der Kugellageraußenring 10 geht dabei von einem Stahlrohr aus einem Stahl mit 13 Gewichts% Cr, 3 Gewichts% Co, 2 Gewichts% Ni, 1 Gewichts% Mo und 0,07 Gewichts% N aus. Dabei ist die Stahlzusammensetzung letztendlich dadurch bestimmt, für den jeweiligen Einsatzfall bei hinreichender Funktionserfüllung die wirtschaftlich optimale sprich auch kostengünstigste Stahlzusammensetzung auszuwählen. So können beispielsweise höhere Anteile an C, Cr, Mn, Mo, Ni, N und dergleichen sich positive auf die damit erzielbare Härten und Korrosionsbeständigkeiten wie auch im Fortgang des Herstellungsprozess erforderten Zeitdauern auswirken, machen aber den Stahl auch teurer.

Je nach Einsatzfall sind damit in anderen Ausführungen also durchaus auch Stähle eingesetzt, die nicht frei von einer beabsichtigten Kohlenstoffzugabe sind, sondern die einen Kohlenstoffanteil bis 0,25 ja sogar hinauf bis 0,3 Gewichts% aufweisen. Auch sind je nach Anwendung bereits Chromanteile von 8,0, 9,0 oder auch 11,0 Gewichts% ausreichend und müssen nicht 17, 22 oder sogar 26 Gewichts% betragen. Weiterhin kann der Stahl auch frei von einer beabsichtigten Stickstoffzugabe sein, oder beispielsweise für kürzere Randaufstickungsdauern auch einen Stickstoffgehalt kleiner 0,1 Gewichts% aufweisen.

Die Grundform des Kugellageraußenrings 10 wird schließlich durch Ablängen vom Stahlrohr und entsprechendes Drehen erzeugt. Dieser Rohling wird danach wie im Folgenden erläutert hochtemperatur-randaufgestickt und wärmebehandelt. In anderen Ausführungen ist der Rohling beispielsweise aus einem Stahlpulver konsolidiert, warm, kalt und/oder anders weich bearbeitet hergestellt.

Das Hochtemperatur-Randaufsticken wird bei einer Temperatur von 1125°C für 11 h isotherm durchgeführt. Nach dem Randaufsticken weist der Rohling in seinen Randbereichen einen Stickstoffgehalt von ca. 0,5 Gewichts% auf. Wiederum je nach Einsatzfall, wobei auch die Geometrie des Rohlings eine Rolle spielen kann, wird das Hochtemperatur-Randaufsticken bei einer Temperatur von 1050°C bis 1190°C, insbesondere 1100°C bis 1150°C für wenige bis einige Stunden, insbesondere 1 h bis 24 h, insbesondere bis 12 h durchgeführt. Dem Hochtemperatur-Randaufsticken nachfolgend wird der randaufgestickte Rohling in einem Ölbad abgeschreckt. In anderen Ausführungsformen erfolgt ein Abschrecken im Salzbad oder mit Wasser.

Danach wird der Rohling zur Austenitkorngrößenreduzierung einem Zwischenanlassen unterzogen, das isotherm bei einer Temperatur von 850°C für 3,5 h durchgeführt wird. Wiederum einsatzfallabhängig findet in anderen Ausführungsformen das Zwischenanlassen bei einer Temperatur von 600°C bis 1000°C, insbesondere 700°C bis 900°C für wenige Stunden, insbesondere 1 h bis 6 h, insbesondere 2 h bis 4 h statt. Danach wird wiederum abgeschreckt.

Dem folgt sodann ein reaustenitisierendes Glühen, das isotherm bei einer Temperatur von 1125°C für eine halbe Stunde durchgeführt wird. Wiederum einsatzfallabhängig wird in anderen Ausführungsformen das Glühen auch bei einer Temperatur von 1000°C bis 1275°C, insbesondere 1050°C bis 1250°C, insbesondere bis einer Temperatur kleiner gleich der beim Hochtemperatur-Randaufsticken, für einige Minuten bis wenige Stunden, insbesondere für 0,1 h bis 2,5 h, insbesondere 0,2 h bis 1,5 h durchgeführt.

Danach wird der Rohling hin zu einer Tieftemperaturbehandlung abgeschreckt, die bei -80°C für 4 h erfolgt. Wiederum einsatzfallabhängig findet in anderen Ausführungsformen die Tieftemperaturbehandlung bei einer Temperatur unter 0°C, insbesondere von -40°C bis -196°C für etliche Minuten bis einige Stunden, insbesondere für 0,3 h bis 8 h, insbesondere 1 h bis 6 h statt. Danach ist der Rohling martensitisch gehärtet. Schließlich wird der Rohling noch isotherm bei einer Temperatur von 250°C für 4 h getempert. Wiederum einsatzfallabhängig findet in anderen Ausführungsformen das Tempern bei einer Temperatur von 150°C bis 450°C, insbesondere bis 350°C für eine halbe bis einige Stunden, insbesondere 1 h bis 8 h, insbesondere 2 h bis 6 h statt. Anstelle des Temperns am Stück, kann das Tempern auch zyklisch wiederholt, insbesondere mit dazwischenliegender Tiefkühlbehandlung ausgeführt werden, wobei dann vorgenannte Zeitangaben die Summe der Wiederholungen betreffen. Schlussendlich wird der gehärtete Rohling durch ein Hartbearbeiten, insbesondere umfassend ein Schleifen, Honen und/oder Superfinishen, zum Kugellageraußenring 10 fertiggestellt.

Ein derartig hergestelltes Bauelement ist dabei mit Vorteil in Maschinen der metallerzeugenden und -verarbeitenden Industrie, aber auch der Papierindustrie, in Pumpen und (Luft)Verdichtern, Lösungen der Luft- und Raumfahrtindustrie, der Nahrungs- und Genussmittelindustrie, aber auch bei elektrischen Fahrzeugen und Sportfahrräder einsetzbar, insbesondere wenn bei diesem Einsatz korrosive Medien auftreten, die ggf. sogar als Lagerschmier- und/oder -kühlmittel genutzt sind.

## Patentansprüche

1. Verfahren zum Herstellen eines Bauelements einer Wälzlagerung, insbesondere eines Abrollbahnelements mit einer Abrollbahn, auf der Wälzkörper eines Wälzlagers zum Abrollen vorgesehen sind, und/oder eines Wälzkörpers eines Wälzlagers,
wobei das Bauelement ausgehend von einem Stahl mit einem Kohlenstoffanteil kleiner 0,3 Gewichts%, mit einem Chromanteil größer 8,0 Gewichts% und einem Stickstoffanteil kleiner 0,1 Gewichts% durch ein Hochtemperatur-Randaufsticken, dem nachfolgend zur Austenitkorngrößenreduzierung durch ein Zwischenanlassen und dem nachfolgend durch ein reaustenitisierendes Glühen hergestellt wird, und wobei das Hochtemperatur-Randaufsticken bei einer Temperatur von 1050°C bis 1190°C für 1 h bis 24 h durchgeführt wird,
das Zwischenanlassen bei einer Temperatur von 600°C bis 1000°C für 1 h bis 6 h durchgeführt wird, und
das reaustenitisierende Glühen bei einer Temperatur von 1000°C bis 1275°C für 0,1 h bis 2,5 h durchgeführt wird.

2. Verfahren nach Anspruch 1, wobei das Hochtemperatur-Randaufsticken insbesondere isotherm bei einer Temperatur von 1100°C bis 1150°C für 1 h bis 12 h durchgeführt wird,
das Zwischenanlassen insbesondere isotherm bei einer Temperatur von 700°C bis 900°C für 2 h bis 4 h durchgeführt wird, und/oder
das reaustenitisierende Glühen insbesondere isotherm bei einer Temperatur von 1050°C bis 1250°C, insbesondere bis einer Temperatur kleiner gleich der beim Hochtemperatur-Randaufsticken, für 0,2 h bis 1,5 h durchgeführt wird.

3. Verfahren nach Anspruch 1 oder 2, wobei dem reaustenitisierenden Glühen nachfolgend eine insbesondere isotherme Tieftemperaturbehandlung bei einer Temperatur unter 0°C, insbesondere von -40°C bis -196°C für 0,3 h bis 8 h, insbesondere 1 h bis 6 h durchgeführt wird, und daran anschließend ein insbesondere isothermes Tempern bei einer Temperatur von 150°C bis 450°C, insbesondere bis 350°C für 1 h bis 8 h, insbesondere 2 h bis 6 h durchgeführt wird,
wobei das Tempern einmal am Stück oder mit wenigstens einer Wiederholung, insbesondere mit einer Tiefkühlbehandlung dazwischen, ausgeführt wird, wobei beim Wiederholen die Zeitangaben die Summe der Wiederholungen betreffen.

4. Verfahren nach einem der Ansprüche 1 bis 3, wobei wenigstens zwischen den Schritten des Hochtemperatur-Randaufstickens, des Zwischenanlassens und des reaustenitisierenden Glühens jeweils ein Abschrecken, insbesondere unter Zuhilfenahme von Öl, einem Salzbad oder Wasser, durchgeführt wird.

5. Verfahren nach einem der Ansprüche 1 bis 4, wobei das Bauelement dem Hochtemperatur-Randaufsticken vorausgehend aus einem Stahlpulver konsolidiert, warm, kalt und/oder weich bearbeitet, und/oder dem Tempern nachfolgend hartbearbeitet wird, insbesondere umfassend ein Schleifen, Honen und/oder Superfinishen.

6. Verfahren nach einem der Ansprüche 1 bis 5, wobei der Kohlenstoffanteil des Ausgangsstahls kleiner 0,25 Gewichts%, der Chromanteil größer 9,0 Gewichts%, insbesondere größer 11,0 Gewichts%, der Ausgangsstahl frei von einer beabsichtigten Stickstoffzugabe ist, Nickel, Molybdän und/oder Mangan umfasst, und/oder der Stichstoffgehalt in einer Randschicht des Bauelements nach dem Randaufsticken größer 0,1 Gewichts%, insbesondere größer 0,3 Gewichts% ist.

## Claims

1. Method for producing a component of a rolling bearing, in particular a rolling track element having a rolling track on which rolling elements of a rolling bearing are provided for rolling, and/or a rolling element of a rolling bearing,
wherein the component is produced starting from a steel having a carbon content of less than 0.3% by weight, having a chromium content of more than 8.0% by weight and a nitrogen content of less than 0.1% by weight, by high-temperature edge nitriding, subsequently, for austenite grain size reduction, by intermediate tempering, and subsequently by reaustenitizing annealing, and
wherein the high-temperature edge nitriding is carried out at a temperature of 1050°C to 1190°C for 1 h to 24 h,
the intermediate tempering is carried out at a temperature of 600°C to 1000°C for 1 h to 6 h, and
the reaustenitizing annealing is carried out at a temperature of 1000°C to 1275°C for 0.1 h to 2.5 h.

2. Method according to Claim 1, wherein the high-temperature edge nitriding is carried out in particular isothermally at a temperature of 1100°C to 1150°C for 1 h to 12 h,
the intermediate tempering is carried out in particular isothermally at a temperature of 700°C to 900°C for 2 h to 4 h, and/or
the reaustenitizing annealing is carried out in particular isothermally at a temperature of 1050°C to 1250°C, in particular up to a temperature less than or equal to that of the high-temperature edge nitriding, for 0.2 h to 1.5 h.

3. Method according to Claim 1 or 2, wherein the reaustenitizing annealing is followed by a low-temperature treatment, in particular an isothermal low-temperature treatment, carried out at a temperature below 0°C, in particular from -40°C to -196°C for 0.3 h to 8 h, in particular 1 h to 6 h, and then by tempering, in particular by isothermal tempering, carried out at a temperature of 150°C to 450°C, in particular up to 350°C, for 1 h to 8 h, in particular 2 h to 6 h,
wherein the tempering is performed once on the piece or with at least one repetition, in particular with a freezing treatment in between, wherein, in the case of repetition, the time information relates to the sum total of the repetitions.

4. Method according to any of Claims 1 to 3, wherein a quenching, in particular with the aid of oil, a salt bath or water, is carried out in each case at least between the steps of the high-temperature edge nitriding, the intermediate tempering and the reaustenitizing annealing.

5. Method according to any of Claims 1 to 4, wherein the component prior to the high-temperature edge nitriding is consolidated from a steel powder, subjected to hot, cold and/or soft working, and/or following the tempering is hard-worked, in particular comprising grinding, honing and/or superfinishing.

6. Method according to any of Claims 1 to 5, wherein the carbon content of the starting steel is less than 0.25% by weight, the chromium content is greater than 9.0% by weight, in particular greater than 11.0% by weight, the starting steel is free from intentional addition of nitrogen and comprises nickel, molybdenum and/or manganese, and/or the nitrogen content in an edge layer of the component after the edge nitriding is greater than 0.1% by weight, in particular greater than 0.3% by weight.

## Revendications

1. Procédé de fabrication d'un composant d'un palier à roulement, en particulier d'un élément de piste de roulement doté d'une piste de roulement sur laquelle des corps de roulement d'un palier à roulement sont prévus pour le roulement, et/ou d'un corps de roulement d'un palier à roulement,
dans lequel le composant est produit à partir d'un acier ayant une teneur en carbone inférieure à 0,3 % en poids, une teneur en chrome supérieure à 8,0 % en poids et une teneur en azote inférieure à 0,1 % en poids au moyen d'une nitruration en solution à haute température, suivie d'un recuit intermédiaire afin de réduire la taille des grains d'austénite, suivi d'un recuit de réausténitisation, et
dans lequel la nitruration en solution à haute température est effectuée à une température de 1050 °C à 1190 °C pendant 1 h à 24 h,
le recuit intermédiaire est effectué à une température de 600 °C à 1000 °C pendant 1 h à 6 h, et
le recuit de réausténitisation est effectué à une température de 1000 °C à 1275 °C pendant 0,1 h à 2,5 h.

2. Procédé selon la revendication 1, dans lequel la nitruration en solution à haute température est effectuée en particulier de manière isotherme à une température de 1100 °C à 1150 °C pendant 1 h à 12 h,
le recuit intermédiaire est effectué en particulier de manière isotherme à une température de 700 °C à 900 °C pendant 2 h à 4 h, et/ou
le recuit de réausténitisation est effectué en particulier de manière isotherme à une température de 1050 °C à 1250 °C, en particulier jusqu'à une température inférieure ou égale à celle de la nitruration en solution à haute température, pendant 0,2 h à 1,5 h.

3. Procédé selon la revendication 1 ou 2, dans lequel le recuit de réausténitisation est suivi d'un traitement à basse température, en particulier isotherme, à une température inférieure à 0 °C, en particulier de -40 °C à -196 °C, pendant 0,3 h à 8 h, en particulier de 1 h à 6 h, puis suivi d'un recuit en particulier isotherme effectué à une température de 150 °C à 450 °C, en particulier jusqu'à 350 °C, pendant 1 h à 8 h, en particulier de 2 h à 6 h,
dans lequel le recuit est effectué en une seule fois en continu ou avec au moins une répétition, en particulier avec un traitement intermédiaire par le froid, les indications de durée se rapportant, en cas de répétition, à la somme des répétitions.

4. Procédé selon l'une quelconque des revendications 1 à 3, dans lequel une trempe, en particulier à l'aide d'huile, d'un bain de sel ou d'eau, est effectuée respectivement au moins entre les étapes de nitruration en solution à haute température, de recuit intermédiaire et de recuit de réausténitisation.

5. Procédé selon l'une quelconque des revendications 1 à 4, dans lequel, avant la nitruration en solution à haute température, le composant est consolidé à partir d'une poudre d'acier, soumis à un traitement à chaud, à froid et/ou à l'état recuit, et/ou est soumis à un traitement à l'état dur après le recuit, cela comprenant en particulier un meulage, un rodage et/ou une surfinition.

6. Procédé selon l'une quelconque des revendications 1 à 5, dans lequel la teneur en carbone de l'acier de départ est inférieure à 0,25 % en poids, la teneur en chrome est supérieure à 9,0 % en poids, en particulier supérieure à 11,0 % en poids, l'acier de départ est exempt d'une addition intentionnelle d'azote, comprend du nickel, du molybdène et/ou du manganèse, et/ou la teneur en azote dans une couche de bordure du composant après nitruration en solution est supérieure à 0,1 % en poids, en particulier supérieure à 0,3 % en poids.
